# EUROPEAN PATENT APPLICATION

(11) **EP 4 427 991 A1**
(43) Date of publication of application: **11.09.2024**
(21) Application number: 23305329.7
(22) Date of filing: 10.03.2023
(51) Int. Cl.: B60R 25/40, H02J 50/10, H02J 7/02, H02J 50/90, G07C 9/00

(54) **EMERGENCY POWER SUPPLY FOR A MOBILE DEVICE HAVING AN EMPTY BATTERY TO OPEN A CAR**

(71) Applicant: THALES DIS FRANCE SAS, 92190 Meudon (FR)
(72) Inventor: PERRET, Davy, 83330 LE BEAUSSET (FR); KATCHADOURIAN, Alain, 13120 GARDANNE (FR); AGOBIAN, Anna, 13600 LA CIOTAT (FR); SCHNEIDER, David, 83140 SIX FOURS LES PLAGES (FR); ZAITI, Reda, 13600 LA CIOTAT (FR)
(74) Representative: Thomas, Christine Marie Catherine

(57) **Abstract**

The present invention relates to a car (C) comprising a battery (B), a door near-field-communication reader (NFCR) and a locking system adapted to be activated and deactivated using a mobile device (S) having a contactless front-end adapted to perform a transaction to lock or unlock the car via the door near-field-communication reader,
said car further comprising an emergency wireless power supplier (EWPS) located at the periphery of the car and connected to the battery (B) of the car, said emergency wireless power supplier (EWPS) being further adapted to be activated to provide power during a time interval enabling a charge of the mobile device (S) sufficient for the mobile device (S) to assist the contactless front-end to perform the transaction to lock or unlock the car(C).

## Description

### FIELD OF THE INVENTION

The present invention relates to a car comprising a battery, a door near-field-communication reader and a locking system adapted to be activated and deactivated using a mobile device having a contactless front-end adapted to perform a transaction to lock or unlock the car via the door near-field-communication reader.

The invention also pertains to a method implemented in a car of the invention.

### BACKGROUND OF THE INVENTION

Car Connectivity Consortium (CCC) is a standards-based organization working on solutions to interoperate technologies. It aims in the promotion of in-vehicle connectivity solutions that use portable devices. It includes the Terminal Mode standard and other technologies like Near Field Communication (NFC) to be used in the future. Actors in CCC come from the automotive, mobile communication and consumer electronics industries. More generally, the consortium is open to any company interested in improving the overall consumer experience when using a mobile device, typically a smartphone in a car.

The consortium targets the creation of open and common solutions for mobile user devices and vehicle-centric information/communication systems. Such solutions aims better interactions between smartphones and car-centric systems to enable safe, seamless and positive user experiences.

The ability for user to open his vehicle with a mobile user device, typically a smartphone, is a major feature for user experiences. This feature is known under the terms of "Digital Key".

However, some painful situations are not addressed so far. Among those situations are the one where a vehicle owner cannot open his vehicle with his mobile device in case its battery charge is too low to assist Contactless Front-End (CLF) for NFC transaction. For example, this problem could happen to a user after trekking with a device that run out of battery. The issue is very painful even if very rare.

Current solutions involve additional hardware tokens as a workaround. Such token can be a mechanical key or an additional NFC card to be carried by the user. Such solutions are not satisfactory as it multiplies the number of objects, which is precisely avoided while using a mobile device to open a car. It also represents additional costs. The multiplication of tokens to open the car can also lead to security issues. Such token can also be an additional device with CLF powered by the field, which is not a feature implemented in mobile device as available on the user side.

Solutions are needed to locally solve the problem without necessitating the intervention of car assistance or the use of any additional hardware tokens.

### SUMMARY OF THE INVENTION

The present invention aims at enabling a user to open a car with a mobile device having an empty or very low battery.

The present invention is defined, in its broadest sense, as a car comprising a battery, a door near-field-communication reader and a locking system adapted to be activated and deactivated using a mobile device having a contactless front-end adapted to perform a transaction to lock or unlock the car via the door near-field-communication reader,
said car further comprising an emergency wireless power supplier located at the periphery of the car and connected to the battery of the car, said emergency wireless power supplier being further adapted to be activated to provide power during a time interval enabling a charge of the mobile device sufficient for the mobile device to assist the contactless front-end to perform the transaction to lock or unlock the car.

It is here noted that the term "car" designates any vehicle or object implementing a solution of the kind of the digital key. With the invention, the user of the mobile device does not need extra hardware token to bring with him. The invention also saves hardware rescue token's costs and security issues and enables digital key even with empty battery. The invention solicits the battery of the car to solve the painful situation.

According to an advantageous feature, the emergency wireless power supplier is located at the same place than the door near-field-communication reader.

This feature enables the mobile device to establish parallel communications with the both entities.

It further enables a preferred embodiment according to which the door near-field-communication reader is adapted to send a signal to the emergency wireless power supplier as soon as the transaction to lock or unlock the car is performed for the power supplier connected to the battery to stop the power supply.

This embodiment enables to further reduce the energy consumption at the battery of the vehicle. An optimization of the charge of the mobile device for the purpose of opening the car and of the battery's energy consumption is thus reached.

Advantageously, the power supply at the emergency wireless power supplier is triggered by a mechanical action of the user.

Such a triggering of the power supplier is an efficient feature in order for the emergency power supply to be effective only on purpose, when the user needs it.

According to a specific feature, the mechanical action is the manipulation of the car handle.

Such a mechanical action is simple. Of course, this triggers the power supply only if the vehicle is still closed.

According to a specific feature, the time interval is fixed and predetermined.

Such a feature enables to limit the power supply duration and thus saves energy at the battery. It has the advantage to be simple even if several cycle of charge could be necessary for a specific mobile device or, contrarily, the duration of the charge could be too long for some mobile devices, which could be able to make the digital key transaction well before the end of the predetermined charge duration.

According to a another specific feature, the car of the invention comprises a controller adapted to control the functioning of the emergency wireless power supplier, said controller having a retry policy triggering an alarm or deactivating the emergency wireless power supply for a predetermined anti-retry time.

This specific feature limits fraudulent behavior and discharge of the battery.

The invention also relates to a method to provide an emergency power supply to a mobile device having a contactless front-end adapted to perform a transaction to lock or unlock the car via a door near-field-communication reader of a car comprising a battery, a door near-field-communication reader and a locking system adapted to be activated and deactivated using the mobile device, said method implementing an emergency wireless power supplier located at the periphery of the car and connected to the battery of the car,
said method comprising the steps of activating the emergency wireless power supplier, providing power by the emergency wireless power supply during a time interval enabling a charge of the mobile device sufficient for the mobile device to assist the contactless front-end to perform the transaction to lock or unlock the car.

This method implemented with a car of the invention enables a digital key transaction to be performed whatever is the charge status of the mobile device.

According to a preferred embodiment, the emergency wireless power supplier being located at the same place than the door near-field-communication reader, the method comprises the step of, for the near-field-communication reader, sending a termination signal to the emergency wireless power supplier as soon as the transaction to lock or unlock the car is performed, and the step of, for the emergency wireless power supplier connected to the battery, stopping the power supply to the emergency wireless power supply.

This preferred embodiment enables to optimize the duration of the charge provided by the battery via the emergency wireless power supplier.

Advantageously the method comprises the step of triggering of the power supply at the emergency wireless power supplier by a mechanical action of the user.

According to a specific feature, the method is such that the time interval is fixed and predetermined.

According to another specific feature, the car having a controller adapted to control the functioning of the emergency wireless power supplier and having a retry policy, the method comprises the step of triggering an alarm or deactivating the emergency wireless power supply for a predetermined anti-retry time when a retry is detected.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 represents a device of the type to which the present invention is applied as an embodiment;
- Figure 2 shows a flowchart of an advantageous embodiment of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

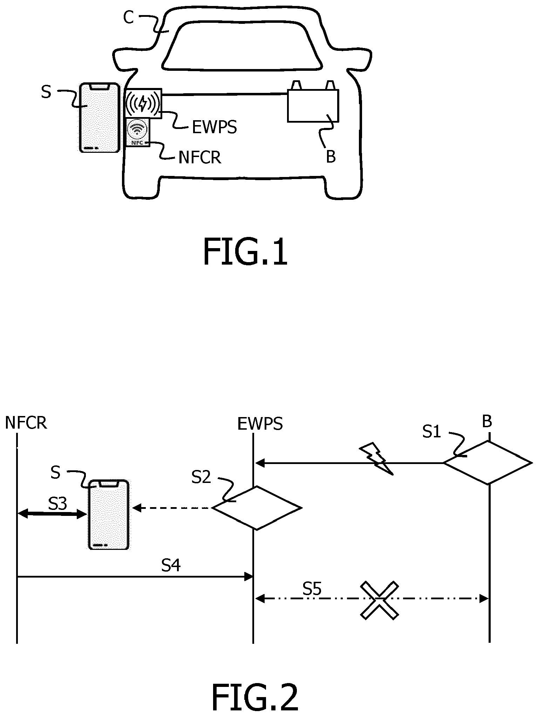

Figure 1 schematically shows an environment of implementation of the invention. Such an environment comprises at least a car C of the invention and a mobile device S, typically a smartphone. Classically, the car C has at least one battery B, regardless of the propulsion means.

In order to implement the digital key feature, the car C has also a door near-field-communication reader NFCR. A locking system, not represented on figure 1, is also present in the car C. It is adapted to be activated and deactivated using the mobile device S.

For this purpose, the mobile device S has a contactless front-end adapted to perform a transaction to lock or unlock the car C via the door near-field-communication reader NFCR.

To implement the invention, the car C comprises an emergency wireless power supplier EWPS located at the periphery of the car C. By periphery of the car C, it is meant that the power supplier does not necessitate the smartphone S to be inside the car C to be charged, but only in the vicinity of the car's metal body. The emergency wireless power supplier EWPS is connected to the battery B. The invention enables to use the battery B of the car C as a source of energy to charge the smartphone S in emergency in case the user of the smartphone S cannot open the car C.

With the invention, the vehicle's battery B can provide wireless power charging to mobile device to enable/assist NFC transaction to open the car.

In a preferred implementation, the power supply charger EWPS is located at the same place than the door NFC reader NFCR. If, despite a very low battery, the smartphone is however on, it enables the contactless front end of the smartphone to be activated as soon as possible, i.e. as soon as the charge of the smartphone is high enough. The activation of the CLF enables the transaction with the door NFC reader NFCR and it triggers the unlocking of the car C.

In order for the battery B not to be drained by abusive use or too long operation of the emergency wireless power supplier EWPS, the activation of the charger EWPS has to be limited in time.

In an advantageous implementation, a mechanical action on the car C triggers the activation of the power supplier EWPS. In a preferred embodiment, a user action on car handle activate the wireless power charger for a predetermined time. Said predetermined time is defined as a compromise between the energy consumption for the battery B and a minimal sufficient for the digital key transaction to be performed.

It is here noted that a mechanical action appears to be the most appropriate solution. A dedicated button or a detection of a pressure on the charging area on the wireless charger can also be used.

Another option could be the detection of a metallic mass by a magnetic loop, which could be the one of the charger. However it might not work with all devices and has the drawback to consume some energy permanently.

A magnet of the device could also be used for the device to be detected. It implies minimal power consumption but requires to stick a magnet on the phone, which could interfere with wireless charging and NFC.

An optical detection of the presence of a device on the reader could also be used. It requires a minimal power consumption but, if the device is black, it might not work. Passing the hand to activate the power supplier can also be optically detected. The disadvantage of optical sensors is that they can be activated by anything: dirt, rain, leaves...

More elaborated optical solution can use a camera and facial recognition. In the invention, facial recognition can be a first level of security to trigger the charger only for authorized people. Then the use of the smartphone according to the invention will be necessary to complete the opening. This method has the drawback to consume noticeable energy permanently and shall not replace the use of smartphone to open the car because it can be easily fooled with a photo.

The punctual activation of the power supply thus implies a limited stress on the battery B and enables the power supply to be active only when necessary.

According to an advantageous feature, the NFC reader NFCR of the car C is adapted to send a signal to the power supplier to stop the power supply as soon as the transactions is performed. It enables to further reduce the energy consumption of the battery for the implementation of the invention.

An embodiment implementing this advantageous feature is illustrated on figure 2. The illustrating method shown on this figure comprises a first step S1 of activating the emergency wireless power supplier EWPS. In an advantageous embodiment, the power supplier EWPS is activated using a mechanical action of the user of the smartphone S on the car C, typically an action on the car handle.

Once activated, the power supplier EWPS provides power wirelessly to the smartphone S in a step S2. In the simplest embodiment, this power provisioning is performed during a time interval enabling a charge of the mobile device S sufficient for the mobile device to assist the contactless front-end of the smartphone S to perform a transaction with the NFC reader NFCR in a step S3. The transaction unlocks the car according to the principles of the digital key.

In a preferred embodiment, the emergency wireless power supplier EWPS is located at the same place than the door near-field-communication reader NFCR. In this case, the NFC reader NFCR is advantageously adapted to send a termination signal in a step S4 to the emergency wireless power supplier. The termination signal is sent as soon as the transaction of step S3 to lock or unlock the car C is performed.

In a step S5, the emergency wireless power supplier EWPS stops the power supply.

In addition, it is advantageous that a retry policy/alarm is defined to prevent not authorized user to charge their device.

Different scenarios could be here addressed. If the phone is low on power and reactivate almost instantly, no retry policy is required. If the phone is deeply discharged, it is often an auxiliary circuit, that drives the start of the charge. It is often a slow charge to avoid the risk of fire if the battery is too discharged and thus chemically altered. A lot of attempts or a long charging time will then be necessary to supply enough power to the CLF. The retry policy should thus enable to make a sufficient number of attempts in a limited time before blocking the possibility to attempt.

Also, the retry policy can be coupled with a recognition procedure. If the device responds to the NFC reader and is not recognized as legitimate, the power supplier can be blocked for X minutes.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Car comprising a battery, a door near-field-communication reader and a locking system adapted to be activated and deactivated using a mobile device having a contactless front-end adapted to perform a transaction to lock or unlock the car via the door near-field-communication reader,
said car further comprising an emergency wireless power supplier located at the periphery of the car and connected to the battery of the car, said emergency wireless power supplier being further adapted to be activated to provide power during a time interval enabling a charge of the mobile device sufficient for the mobile device to assist the contactless front-end to perform the transaction to lock or unlock the car.

2. Car according to claim 1, wherein the emergency wireless power supplier is located at the same place than the door near-field-communication reader.

3. Car according to claim 2, wherein, the door near-field-communication reader is adapted to send a signal to the emergency wireless power supplier as soon as the transaction to lock or unlock the car is performed for the power supplier connected to the battery to stop the power supply.

4. Car according to one of preceding claims, wherein the power supply at the emergency wireless power supplier is triggered by a mechanical action of the user.

5. Car according to claim 4, wherein the mechanical action is the manipulation of the car handle.

6. Car according to one of claims 1 to 3, wherein the power supply at the emergency wireless power supplier is triggered by an optical detection of the user.

7. Car according to one of preceding claims, wherein the time interval is fixed and predetermined.

8. Car according to any one of preceding claims, said car comprising a controller adapted to control the functioning of the emergency wireless power supplier, said controller having a retry policy triggering an alarm or deactivating the emergency wireless power supply for a predetermined anti-retry time.

9. Method to provide an emergency power supply to a mobile device having a contactless front-end adapted to perform a transaction to lock or unlock the car via a door near-field-communication reader of a car comprising a battery, a door near-field-communication reader and a locking system adapted to be activated and deactivated using the mobile device, said method implementing an emergency wireless power supplier located at the periphery of the car and connected to the battery of the car,
said method comprising the steps of activating the emergency wireless power supplier, providing power by the emergency wireless power supply during a time interval enabling a charge of the mobile device sufficient for the mobile device to assist the contactless front-end to perform the transaction to lock or unlock the car.

10. Method according to claim 9, the emergency wireless power supplier being located at the same place than the door near-field-communication reader, said method comprising the step of, for the near-field-communication reader, sending a termination signal to the emergency wireless power supplier connected to the battery as soon as the transaction to lock or unlock the car is performed, and the step of, for the emergency wireless power supplier connected to the battery, stopping the power supply to the emergency wireless power supply.

11. Method according to one of claims 9 and 10, said method comprising the step of triggering of the power supply at the emergency wireless power supplier by a mechanical action of the user.

12. Method according to one of claims 9 and 10, said method comprising the step of triggering of the power supply at the emergency wireless power supplier by an optical detection of the user.

13. Method according to one of claims 9 to 12, said method being such that the time interval is fixed and predetermined.

14. Method according to one of preceding claims 9 to 13, the car having a controller adapted to control the functioning of the emergency wireless power supplier and having a retry policy, said method comprising the step of triggering an alarm or deactivating the emergency wireless power supply for a predetermined anti-retry time when a retry is detected.
